# FASCICULE DE BREVET EUROPEEN

(11) **EP 0 528 710 B1**
(45) Date de publication et mention de la délivrance du brevet: **24.05.1995**
(21) Numéro de dépôt: 92402124.9
(22) Date de dépôt: 23.07.1992
(51) Int. Cl.: C03C 17/36

(54) **Technique de transformation d'une plaque en matériau transparent en parement pour panneau de façade**
Technik zur Transformierung einer Scheibe aus transparentem Material in eine Verkleidungsplatte für ein Verkleidungselement
Technique for transforming a plate out of a transparent material into a faceplate for a facade panel

(30) Priorité: 25.07.1991 FR 9109409
(43) Date de publication de la demande: 24.02.1993
(73) Titulaire: SAINT-GOBAIN VITRAGE INTERNATIONAL, 92400 Courbevoie (FR)
(72) Inventeur: Beaufays, Jean-Pierre, B-5190 Jemeppe S/Sambre (BE); Halleux, Jean-Marc, B-5081 Meux (La Bruyere) (BE)
(74) Mandataire: Muller, René

(56) Documents cités:
- US-A- 4 101 200
- US-A- 4 534 841
- US-A- 4 900 630

## Description

L'invention concerne les couches minces permettant de transformer un vitrage réfléchissant en parement pour panneau de façade.

Lorsqu'un architecte envisage de créer une façade entièrement vitrée constituée de la juxtaposition de vitrages et de panneaux de façade il souhaite le plus souvent avoir un aspect de réflexion très voisin pour les parties équipées de vitrages transparents et pour celles faites de panneaux opaques.

Lorsque le vitrage est en verre clair simple ou double mais sans couche réfléchissante, le problème de l'assortiment du panneau d'allège et du vitrage se pose en termes spécifiques : la réflexion spéculaire du vitrage (simple ou double) est réduite mais facile à reproduire sur le parement, en revanche la réflexion diffuse provenant de l'intérieur du bâtiment joue un rôle très important surtout lors de l'ensoleillement et elle est très difficile à retrouver sur les parois opaques car elle est très variable. L'harmonie est meilleure si le verre du vitrage est coloré dans la masse : le même verre, émaillé avec soin, permettra d'obtenir plus facilement l'effet souhaité.

Mais avec les vitrages réfléchissants les phénomènes sont différents, surtout lorsque le coefficient de réflexion spéculaire atteint des valeurs élevées, de l'ordre de 3O % par exemple. Le problème principal est celui de l'obtention du même effet de réflexion spéculaire sur le vitrage et sur le parement opaque. Les effets de couleur produits par les couches minces déposées à la surface du verre sont en général le résultat de plusieurs phénomènes optiques, certains liés à l'absorption de la lumière par le verre ou par certaines couches minces absorbantes et les autres dus à des couches interférentielles. De tels phénomènes sont liés aux indices de réfraction des différents milieux en présence, verre, différentes couches et air. On comprend immédiatement que si des couches actives d'un vitrage réfléchissant sont situées sur sa face arrière, celle qui est dirigée vers l'intérieur du local, le fait d'ajouter un matériau absorbant, un émail par exemple, sur ces couches modifiera l'indice de réfraction du milieu voisin de la couche et donc les caractéristiques en réflexion. En effet, en général l'indice du matériau absorbant est sensiblement différent de 1, valeur de l'indice de l'air. Il en résultera que, dans le cas des couches minces interférentielles, la tentative pour reproduire en allège la couleur du vitrage se soldera par un échec.

La technique la plus efficace sur le plan de l'aspect est celle qui consiste à réaliser un double vitrage analogue au vitrage-vision mais avec comme face arrière, une tôle équipée d'un revêtement absorbant, de couleur adaptée, en général noir mat. Cette solution qui permet dans une de ses variantes d'atteindre des épaisseurs très minces nécessite cependant une phase de production supplémentaire.

L'invention se donne pour tâche de réaliser un verre à couches qui fournisse au panneau de façade qui l'utilise comme face avant, un aspect voisin de celui d'un vitrage réfléchissant à couches donné mais qui puisse être exploité sur les lignes de production de panneaux de façade exactement comme un verre émaillé. Le but de l'invention consiste aussi à atteindre ce résultat de préférence en utilisant les mêmes paramètres de production des couches que ceux du dépôt de la couche-vision.

Dans les immeubles de grande hauteur, spécialement les immeubles de bureaux, on utilise de plus en plus des vitrages fonctionnels réfléchissants qui permettent à la fois de personnaliser le bâtiment en lui donnant un aspect spécifique mais également de limiter les apports d'énergie solaire et donc les dépenses de climatisation. Lorsque la façade est une façade "tout-verre" comme dans le cas des façades-rideaux ou bien dans le cas où l'on supprime les encadrements (système dit à "structural glazing") on souhaite en général que les panneaux opaques situés entre les vitrages-visions aient le même aspect qu'eux, c'est-à-dire la même couleur et le même coefficient de réflexion lumineuse sous les mêmes angles d'observation. On a vu plus haut que ces caractéristiques sont difficiles à obtenir dans les techniques de revêtement du vitrage-vision avec une couche absorbante.

A cause des indices de réfraction des émaux et des matières plastiques, qui sont différents de celui de l'air, il est nécessaire, si l'on veut garder le même spectre lumineux en réflexion, de modifier l'un des éléments qui agissent sur la couleur de manière à compenser le changement dû à la modification de l'indice : un pigment noir ou gris neutre introduit dans l'émail ou dans le polymère en question fournirait un changement de la couleur en réflexion. Une adaptation en donnant au pigment une teinte différente peut améliorer la situation mais ne constitue pas une panacée, en effet les couleurs interférentielles en réflexion dépendent de l'angle d'incidence et le correctif apporté au pigment ne peut varier lui, en fonction de la direction d'observation. Une solution moins mauvaise consiste à modifier les caractéristiques des couches interférentielles (épaisseurs respectives, adaptation d'indices par des changements de matériaux) pour changer la couche vision mais, outre que les calculs des éléments de ces couches de substitution sont compliqués, la mise en oeuvre l'est encore plus et obère le prix de revient.

Les techniques simples qui consistent à coller un film généralement noir, tel que ceux de dénominations commerciales TAC-MIR ou ARCLADE à l'arrière de la couche présentent de nombreux inconvénients. Leur mise en oeuvre est délicate, en particulier un soin extrême est nécessaire pour éviter la formation de plis, leur tenue chimique (compatibilité avec la couche réfléchissante en particulier) n'est pas toujours garantie. Les films collés présentent par ailleurs un inconvénient supplémentaire inattendu du point de vue de la sécurité : lors d'une casse accidentelle d'une plaque de parement de façade, la trempe du verre permet de limiter les risques d'accident puisque de nombreux petits fragments sont créés et qu'ils tombent en s'éparpillant sans risque d'accident grave pour les personnes. En revanche, si la casse d'un panneau de verre trempé équipé d'un film sur sa face arrière se produit, les fragments restent collés au film et le panneau risque de tomber en un seul morceau très dangereux lors de la chute sur le sol. Il en est de même avec les techniques utilisant des produits feuilletés avec des résines spéciales. C'est le cas de celle du brevet des Etats-Unis US 4 822 680 qui propose un polyuréthane pigmenté qui est réticulé et lié moléculairement au verre.

Une technique assez largement employée consiste à développer pour chaque type de couches-vision un type de couches-allège associé qui fournit en réflexion, un aspect très voisin de celui du vitrage. Cependant jusqu'à aujourd'hui, les combinaisons opaques proposées sont sensiblement différentes des combinaisons transparentes qu'on veut reproduire en réflexion. Les réglages (puissances électriques, débits de gaz) sur les lignes de production de pulvérisation cathodique sont différents et le plus souvent, les cibles elles-mêmes qui équipent les cathodes, doivent être changées : l'organisation de la production sur les lignes est compliquée et le coût, élevé, en effet, il est très courant d'avoir à fabriquer sur une même ligne de production une cinquantaine de types de couches-vision différents ; il ne saurait être question de multiplier ce nombre par deux pour disposer de toute la gamme des couches-allège correspondante.

Le moyen le plus efficace et le plus pratique de l'art antérieur consistait à réaliser un panneau, en particulier un panneau d' allège, qui ait la même constitution qu'un vitrage isolant et dont la face avant soit le vitrage-vision lui-même. Ainsi le brevet américain US 4 000 593 propose d'utiliser comme plaque arrière du vitrage isolant une tôle métallique revêtue d'un matériau dont la couleur doit être adaptée. Plus récemment la demande de brevet européen EP 408 426 propose de diminuer sensiblement l'épaisseur du panneau en utilisant comme face arrière une tôle mince équipée de bossages, les sommets de ceux-ci étant en contact avec le vitrage de la face avant qui est en tout point identique à celui qui est utilisé comme face avant du vitrage-vision. Une telle plaque composite, très mince représente le stade ultime du développement dans cette voie. Elle offre le grand avantage de pouvoir être exploitée comme n'importe quel parement lors de la réalisation de panneaux de façade, en particulier la combinaison avec les isolants de toute nature, fibreux collés, mousses diverses collées ou injectées, se fait exactement dans les mêmes conditions que s'il s'agissait d'une plaque de verre émaillé classique.

Cependant la réalisation de la plaque composite est une opération, manuelle en général, dont on aimerait pouvoir se dispenser. Le vieillissement d'un tel ensemble, qui n'est autre qu'un vitrage isolant d'un type particulier, peut également poser des problèmes, en particulier à cause de l'échauffement très important de la lame d'air suite à un ensoleillement prolongé. Par ailleurs, lorsque la couche vision, sur la face interne d'un premier verre est associée à un deuxième élément pour former un vitrage isolant, il est difficile de retrouver un coefficient de réflexion lumineuse identique sur le panneau d'allège et sur le vitrage.

Le brevet américain US 4 900 630 décrit une plaque de verre revêtue d'une couche mince de TiO₂ ou Cr₂O₃ sur laquelle sont déposées une couche absorbante de TiN et une couche métallique de Ti ou Cr. La couche absorbante le TiN donne au vitrage une apparence colorée dorée.

Toutes les techniques précédentes présentent donc une série d'inconvénients, ou bien elles se révèlent incapables de reproduire complètement l'aspect en réflexion des couches interférentielles du vitrage-vision, ou bien, quand elles atteignent cet objectif, c'est au prix d'une organisation compliquée de la production et à un coût élevé ou bien alors elles nécessitent une phase supplémentaire dans le processus de fabrication et peuvent présenter des problèmes de vieillissement.

L'invention propose une technique de transformation d'une plaque en matériau transparent (1, 8, 14) destinée à constituer le parement d'un panneau, la plaque étant recouverte d'une ou plusieurs couches minces (2, 9, 10) déposées par pulvérisation cathodique et destinée à être installée sur une façade où des vitrages fonctionnels réfléchissants sont équipés de la ou des mêmes couches minces (2, 9, 10), la réflexion lumineuse et la couleur du parement étant sensiblement identiques à celles des vitrages, **caractérisée en ce** qu'on dépose par pulvérisation cathodique sur cette ou ces couches minces une combinaison de couches opacifiantes comportant une couche absorbante (6, 11) à base de chrome nitruré avec une épaisseur supérieure à 30 nm, cette couche étant recouverte d'une couche (7, 12) d'un métal appartenant au groupe des métaux Cr, Ti, Al, Ni et de leurs alliages.

De préférence l'épaisseur de couche absorbante est de 45 nm.

Quant à la couche métallique, elle est avantageusement à base de chrome avec une épaisseur supérieure à 50 nm et de préférence d'environ 70 nm.

En outre, l'invention concerne un parement d'un panneau selon la revendication indépendente 9

Par rapport aux techniques antérieures l'invention permet de simplifier de manière très importante la fabrication de panneaux de façade dont l'aspect est en harmonie avec celui des vitrages réfléchissants quel que soit l'angle sous lequel on les observe, que la comparaison se fasse avec un monovitrage ou avec un vitrage isolant, et parceque les couches réfléchissantes sont déposées par pulvérisation cathodique, la technique de l'invention permet de réaliser la plaque de parement sans phase de fabrication supplémentaire. Cette technique fournit également la plaque de parement la plus mince qu'il soit possible de réaliser puisque son épaisseur est celle du verre à couche utilisé dans le vitrage-vision.

La description illustrée par les figures permettra de voir avec précision comment est réalisée l'invention.
**La figure 1** montre schématiquement la face avant d'un vitrage-vision,
**La figure 2 et la figure 3** illustrent la technique de l'invention pour fabriquer la face avant d'un panneau de façade qui présente en réflexion un spectre très voisin de celui du vitrage-vision,
La technique la plus adaptée à la mise en oeuvre de l'invention est la pulvérisation cathodique assistée par un champ magnétique. C'est déjà la technique la plus couramment utilisée pour la fabrication des vitrages réfléchissants destinés à la protection solaire et qui permettent de donner aux bâtiments les effets architecturaux les plus variés. Et la réalisation, sur les mêmes lignes de fabrication d'une phase de production supplémentaire pour créer le parement de panneau de façade conforme à l'invention est particulièrement simple.

La technique la mieux adaptée est celle décrite par exemple dans le brevet allemand DE 24 63 431 C2 pour le "magnétron planar" ou le brevet US 3 907 660 pour le magnétron dit "en courroie". Ces méthodes, utilisées en atmosphère d'argon pour les dépôts métalliques ou en atmosphère réactive pour les couches à composés chimiques tels qu'oxydes ou nitrures, permettent traditionnellement d'obtenir les couches-vision les plus variées. Le brevet US 4 022 947 propose par exemple d'associer une couche métallique à base d'alliage de chrome et de nickel ou bien de fer, de chrome et de nickel avec une couche d'oxyde du même alliage, celle-ci pouvant être placée en-dessous ou au-dessus de la couche métallique. Lorsque cette couche est située entre le verre et le métal, l'ajustement de son épaisseur permet d'obtenir grâce aux phénomènes d'interférence lumineuses, les effets les plus variés en réflexion lorsque le vitrage est observé au travers du verre. Mais le métal est le plus souvent protégé lui-même par une couche qui joue elle aussi un rôle optique. D'autres compositions destinées à fournir une gamme de couches-vision sont également connues ainsi l'utilisation de nitrure de titane obtenu par pulvérisation réactive à partir d'une cible en titane permet avec une couche unique d'obtenir des effets colorés dus à la combinaison de l'absorption du matériau et aux interférences que permet de réaliser son indice de réfraction élevé.

Le principe de l'invention consiste, pour réaliser la couche complexe qui recouvre le verre du panneau de façade, à déposer sur la couche-vision des couches supplémentaires soit immédiatement à la suite du dépôt de la couche-vision soit lors d'une opération indépendante. Ce dernier cas se présentera en particulier si la couche-vision n'a pas été déposée par la même technique que la couche complexe supplémentaire.

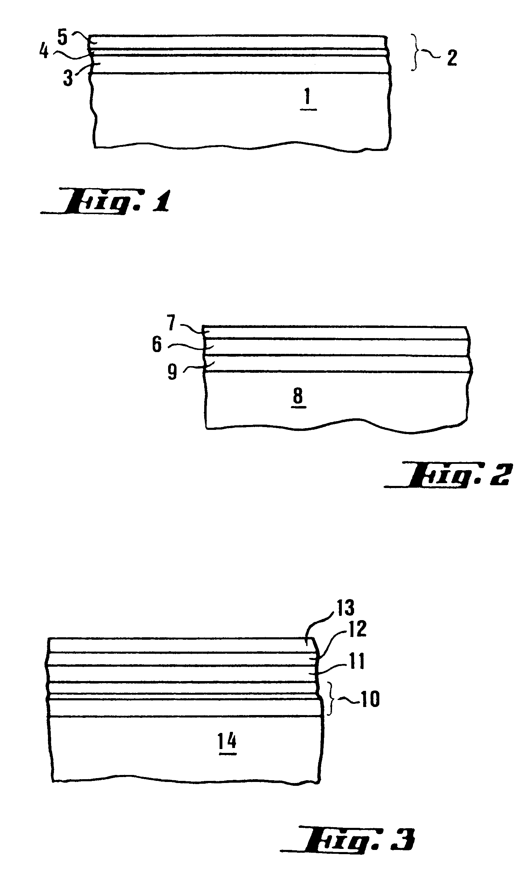

La figure 1 représente une feuille de verre 1 recouverte d'un ensemble de couches 2. Cet ensemble est par exemple constitué de trois couches unitaires 3, 4 et 5.

Sur la figure 2 on a représenté un panneau de parement réalisé conformément à l'invention. On y voit une couche-vision 9 recouverte de la combinaison de deux couches 6, 7 qui donnent au panneau vu au travers du substrat 8 un aspect tout à fait identique à celui du vitrage vision équipé de la seule couche 9.

La figure 3 présente la couche-vision de la figure 1 recouverte de couches selon l'invention. Elles comportent une couche de protection mécanique supplémentaire.

### Exemple 1

La couche-vision déposée sur une glace trempée en verre silico-sodo-calcique clair d'épaisseur 6 mm est de couleur argent. Elle comporte deux couches élémentaires, la première en contact avec le verre, en acier inoxydable, la seconde en nitrure de titane TiN. La couche métallique est obtenue par pulvérisation cathodique à confinement magnétique des électrons (magnétron planar) à l'aide d'une cible en alliage Inconel 600 (International Nickel Corp.) en atmosphère d'argon. Son épaisseur est d'environ 15 nm. Cette couche est recouverte d'une couche en nitrure de titane d'une épaisseur d'environ 1O à 15 nm. Elle est obtenue par pulvérisation réactive avec une cible de titane pur en présence d'une atmosphère d'argon et d'azote. Cette couche est normalement destinée à être installée en monovitrage dans les façades, couche côté intérieur. Son aspect en réflexion du côté extérieur est argenté. Pour le quantifier, on a mesuré à l'aide d'une sphère intégrante le coefficient de réflexion pour un illuminant D₆₅ de la Commission Internationale de l'Eclairage (CIE). On a également détermine la longueur d'onde dominante λ _{D} et le facteur de pureté P.

On a dans un deuxième temps déposé sur la même couche dite SS 1O8, une combinaison de couches selon l'invention. Il s'agit d'abord d'une couche de chrome nitruré d'une épaisseur de 45 nm puis d'une couche de chrome métallique dont l'épaisseur est de l'ordre de 70 nm ou plus. Cette épaisseur doit simplement être suffisante pour que la transmission lumineuse du panneau en l'absence de la couche absorbante soit au maximum de 2 %. La technique de dépôt est ici aussi la pulvérisation cathodique à magnétron. La première couche est déposée à l'aide d'une cible en chrome avec une atmosphère d'azote et d'argon et la seconde avec la même cible mais en présence d'argon seulement. L'impression pour l'oeil en réflexion est très voisine de celle de la couche-vision. Les mêmes mesures optiques ont également été réalisées.

A titre de comparaison, on a recouvert la même couche-vision SS 1O8 du film polyester spécialement développé pour cette application de panneau de façade, le Tac-mir.

Les résultats comparatifs figurent dans le tableau où on a inscrit également la transmission lumineuse T_{L} :

| | T_{L} (%) | R_{L} (%) | λ_{D} (nm) | P (%) |
|---|---|---|---|---|
| Vision SS 1O8 | 8,4 | 42,2 | 485 | 5,3 |
| id + Tac-mir | O,1 | 43,0 | 487 | 4,2 |
| id + couche opaque | O,1 | 42,1 | 486 | 5,1 |

On voit donc que la solution de l'invention reproduit presque à l'identique l'aspect en réflexion de la couche-vision : l'intensité lumineuse de la lumière réfléchie est très voisine. La couleur, identique (la longueur d'onde dominante est la même à 2/1000 près) et l'intensité de cette couleur (facteur de pureté) pratiquement la même.

### Exemple 2

Il s'agit ici d'une couche de la même gamme, appelée TB 14O. La plaque opague est représentée figure 2. La couche-vision 9 est monolithique, faite de nitrure de titane, TiN. Son épaisseur est 25 nm. Elle a, en réflexion côté verre, donc côté extérieur au bâtiment, une couleur bleue.

Sur cette couche on a déposé la couche opaque de l'invention, elle est constituée d'une couche 6 de chrome nitruré, CrN_{X} recouverte ici aussi de chrome métallique 7. Les caractéristiques des deux couches sont les mêmes que précedemment.

La comparaison était faite ici aussi avec un vitrage recouvert d'une pellicule de matière plastique "Tac-mir".

| | T_{L} (%) | R_{L} (%) | λ_{D} (nm) | P (%) |
|---|---|---|---|---|
| Vision TB 14O | 41,3 | 9,4 | 479 | 22,8 |
| id + Tac-mir | O,1 | 11,4 | 478 | 15,6 |
| id + couche opaque | O,1 | 1O,9 | 477 | 19,5 |

Ici aussi l'aspect en réflexion est très voisin de celui de la couche-vision. En particulier, la pureté de la teinte approche davantage celle du vitrage que ne le fait la combinaison utilisant le film plastique.

### Exemple 3

La couche-vision donne ici au vitrage une teinte pastel. La référence est PB 12O. Sa composition est triple ici : c'est elle qui est représentée figure 1.

Au contact du verre, est prévue une couche d'oxyde d'un alliage zinc-étain 3 d'une épaisseur de 80 nm. Elle est obtenue par pulvérisation réactive à partir d'une cible d'un alliage SnZn en atmosphère argon-oxygène. La couche absorbante 4 déposée sur l'oxyde a une composition en métal nitruré, elle est à base d'acier inoxydable. Son épaisseur est de 2O nm environ. Elle est déposée avec un magnétron planar équipé d'une cible en Inconel 600 en atmosphère d'argon-azote. Elle est protégée ici par une mince (1O nm) couche d'oxyde de titane 5, réactive elle aussi.

La plaque selon l'invention est représentée, figure 3. On retrouve en 10 les éléments de la couche-vision 2, la couche intermédiaire absorbante 11 selon l'invention est la même que dans l'exemple 1, elle est à base de chrome nitruré. La couche métallique 12 est, comme précédemment en chrome, son épaisseur est la-même. Mais ici, on a prévu de la protéger à l'aide d'une couche anti-abrasion 13 en nitrure de titane déposée par pulvérisation réactive. Son épaisseur est de 1O nm. Les résultats optiques sont les suivants :

| | T_{L} (%) | R_{L} (%) | λ_{D}(nm) | P (%) |
|---|---|---|---|---|
| Vision PB 12O | 19,6 | 16,7 | 480 | 22,1 |
| id + Tac-mir | O,1 | 19,0 | 480 | 20,9 |
| id + couche opaque | O,1 | 20,0 | 480 | 23,3 |

Comme dans le cas des deux exemples précédents, on voit que les résultats obtenus avec la couche opacifiante de l'invention sont très bons et souvent meilleurs que ceux obtenus avec le film plastique noir en particulier en ce qui concerne le facteur de pureté.

Une variante de l'invention concerne les couches- vision ou bien chères, ou bien complexes à réaliser ou bien encore fragiles comme par exemple les couches à base d'argent. Dans ce cas, il est intéressant d'appliquer les couches opacifiantes de l'invention, couche absorbante puis couche métallique non pas sur l'ensemble des couches-vision proprement dit, mais sur un ensemble de couches moins sensible, mais qui a exactement le même aspect, aussi bien pour la réflexion lumineuse que pour la couleur.

L'utilisation de métaux chers et/ou fragiles tels que l'argent, l'or ou le cuivre dans des couches-vision se justifie par leur propriété d'émissivité réduite qui leur permet de réduire les déperditions thermiques des vitrages isolants dans lesquels on les intègre ou d'en abaisser le facteur solaire. Dans le cas des panneaux d'allège, où l'isolation s'effectue avec les moyens habituels des façades opaques, matériaux fibreux, ou mousses, la caractéristique de basse émissivité n'est plus utile et l'on peut remplacer les métaux chers et/ou fragiles par d'autres moins sensibles comme, dans le cas de l'argent, l'aluminium, le chrome, le nickel, etc.. La seule contrainte est d'obtenir, avant dépôt des couches de l'invention, le même aspect qu'avec la couche-vision d'origine : réflexion lumineuse et couleur. Le choix des matériaux et la détermination des paramètres de dépôt relèvent des compétences de l'homme du métier. Il est habituel d'utiliser les mêmes matériaux interférentiels (oxyde d'étain par exemple) en sous-couche et en sur-couche que dans la couche-vision qui sert de modèle.

Les exemples chiffrés présentés plus haut et qui concernent des couches-vision très différentes (un, deux ou trois composants, réflexion allant de 9 à 42 %, couleurs neutre ou bleue, facteur de pureté de 5 à 23 %) montrent que l'invention apporte une solution élégante au problème de la couche opaque associée à une couche-vision quelle qu'elle soit, même avec un facteur de réflexion faible.

## Revendications

1. Technique de transformation d'une plaque en matériau transparent (1, 8, 14) destinée à constituer le parement d'un panneau, la plaque étant recouverte d'une ou plusieurs couches minces (2, 9, 10) déposées par pulvérisation cathodique et destinée à être installée sur une façade où des vitrages fonctionnels réfléchissants sont équipés de la ou des mêmes couches minces (2, 9, 10), la réflexion lumineuse et la couleur du parement étant sensiblement identiques à celles des vitrages, **caractérisée en ce** qu'on dépose par pulvérisation cathodique sur cette ou ces couches minces une combinaison de couches opacifiantes comportant une couche absorbante (6, 11) à base de chrome nitruré avec une épaisseur supérieure à 30 nm, cette couche étant recouverte d'une couche (7, 12) d'un métal appartenant au groupe des métaux Cr, Ti, Al, Ni et de leurs alliages.

2. Technique selon la revendication 1, **caractérisée en ce que** l'épaisseur de la couche absorbante est d'environ 45 nm.

3. Technique selon la revendication 1 ou 2, **caractérisée en ce que** le métal est le chrome.

4. Technique selon l'une des revendications précédentes, **caractérisée en ce que** l'épaisseur de la couche métallique est supérieure à 50 nm et de préférence de 70 nm.

5. Technique selon l'une des revendications précédentes, **caractérisée en ce que** la couche supérieure (5) du vitrage-vision à couche(s) (2) est choisie à base d'un composé du titane.

6. Technique selon la revendication 5, **caractérisée en ce que** le composé du titane est un nitrure.

7. Technique selon la revendication 6, **caractérisée en ce que** le composé du titane est un oxyde.

8. Technique selon l'une des revendications précédentes, **caractérisée en ce qu**'on dépose sur la combinaison de couches opacifiantes une surcouche de protection (13), notamment choisie à base de TiN, et avec de préférence une épaisseur d'environ 10 nm.

9. Parement d'un panneau destiné à être associé à un vitrage-vision réfléchissant dans une façade, notamment obtenu conformément à la technique selon l'une des revendications précédentes et présentant pratiquement le même aspect en réflexion lumineuse que le vitrage-vision, en termes de réflexion lumineuse, de longueur d'onde dominante et de pureté en réflexion, **caractérisé en ce qu'**il est constitué d'un vitrage-vision réfléchissant comportant une plaque en matériau transparent (1, 8, 14) surmontée d'une ou plusieurs couches minces (2, 9, 10) sur laquelle (lesquelles) est déposée une combinaison de couches opacifiantes comprenant une couche absorbante (6, 11) à base de chrome nitruré avec une épaisseur supérieure à 30 nm lesdites couches étant recouvertes d'une couche métallique (7, 12) à base de chrome avec une épaisseur supérieure à 50 nm.

10. Paiement selon la revendication 9, **caractérisé en ce que** l'épaisseur de la couche absorbante est d'environ 45 nm.

11. Parement selon la revendication 9 ou 10, **caractérisé en ce que** l'épaisseur de la couche métallique est d'environ 70 nm.

12. Parement selon la revendication 11, **caractérisé en ce que** la combinaison de couches opacifiantes est revêtue d'une surcouche de protection, notamment à base de TiN.

13. Parement selon la revendication 11 ou 12, **caractérisé en ce qu**'il présente une valeur de R_{L} entre 9 et 42 %, une valeur de pureté entre 5 et 23 % et une couleur en réflexion neutre ou bleu, R_{L}, pureté et couleur pratiquement similaires à celles d'un vitrage-vision muni des mêmes couches minces (2, 9, 10).

14. Application du parement comprenant une plaque en matériau transparent selon l'une quelconque des revendications précédentes à la réalisation de panneaux de façade associés à des vitrages-vision d'aspect voisin.

15. Panneau de façade comprenant un parement selon l'une des revendications 9 à 13, **caractérisé en ce que** le parement est directement associé à un matériau isolant.

## Claims

1. Technique for transforming a plate of transparent material (1, 8, 14) intended for forming the facing of a panel, the plate being covered with one or more thin films (2, 9, 10) deposited by cathodic sputtering and being intended to be installed on a building outer wall, where functional reflecting panes are equipped with the same thin film or films (2, 9, 10), the light reflection and the colour of the facing being substantially identical to that of the panes, characterized in that there is deposited by cathodic sputtering, onto this thin film or films, a combination of opacifying films comprising an absorbent film (6, 11) based upon nitrided chromium having a thickness exceeding 30 nm, this film being covered with a film (7, 12) of a metal belonging to the group of the metals Cr, Ti, Al, Ni and their alloys.

2. Technique according to Claim 1, characterized in that the thickness of the absorbent film is approximately 45 nm.

3. Technique according to Claim 1 or 2, characterized in that the metal is chromium.

4. Technique according to one of the preceding Claims, characterized in that the thickness of the metallic film is greater than 50 nm and preferably is 70 nm.

5. Technique according to one of the preceding Claims, characterized in that the upper film (5) of the viewing pane having coatings (2) is chosen based upon a titanium compound.

6. Technique according to Claim 5, characterized in that the titanium compound is a nitride.

7. Technique according to Claim 6, characterized in that the titanium compound is an oxide.

8. Technique according to one of the preceding Claims, characterized in that there is deposited, onto the combination of opacifying films, a protective overlying film (13), especially chosen based upon TiN, and preferably having a thickness of approximately 10 nm.

9. Facing of a panel intended to be associated with a reflecting viewing pane in a building outer wall, especially produced in accordance with the technique according to one of the preceding Claims and having perceptibly the same appearance in light reflection as the viewing pane, in terms of light reflection, dominant wavelength and purity in reflection, characterized in that it is formed of a reflecting viewing pane comprising a plate of transparent material (1, 8, 14) overlain with one or more thin films (2, 9, 10), onto which there is deposited a combination of opacifying films comprising an absorbent film (6, 11) based upon nitrided chromium having a thickness exceeding 30 nm, said films being covered with a metallic film (7, 12) based upon chromium having a thickness exceeding 50 nm.

10. Facing according to Claim 9, characterized in that the thickness of the absorbent film is approximately 45 nm.

11. Facing according to Claim 9 or 10, characterized in that the thickness of the metallic film is approximately 70 nm.

12. Facing according to Claim 11, characterized in that the combination of opacifying films is coated with a protective overlying film, especially based upon TiN.

13. Facing according to Claim 11 or 12, characterized in that it has a value of R_{L} between 9 and 42%, a purity value between 5 and 23% and a neutral or blue colour in reflection, R_{L}, purity and colour being perceptibly similar to those of a viewing pane provided with the same thin films (2, 9, 10).

14. Application of the facing comprising a plate of transparent material according to any one of the preceding Claims to the construction of building outer wall panels associated with viewing panes of similar appearance.

15. Building outer wall panel comprising a facing according to one of Claims 9 to 13, characterized in that the facing is directly associated with an insulating material.

## Patentansprüche

1. Verfahren zur Abwandlung einer Platte aus durchsichtigem Material (1, 8, 14), die für die Bildung der Verkleidung einer Fassadenplatte bestimmt ist, wobei die Platte mit einer oder mehreren durch Kathodenzerstäubung aufgebrachten dünnen Schicht/en (2, 9, 10) überzogen und bestimmt ist, in einer Fassade eingebaut zu werden, worin funktionelle Reflexionsverglasungen mit derselben oder denselben dünnen Schicht/en (2, 9, 10) versehen sind, wobei Lichtreflexion und Farbe der Verkleidung im wesentlichen gleich denjenigen der Verglasungen sind, **dadurch gekennzeichnet, daß** auf diese dünne Schicht/en durch Kathodenzerstäubung eine Kombination aus undurchsichtig machenden Schichten aufgebracht wird, welche eine über 30 nm dicke Absorptionsschicht (6, 11) auf der Grundlage von Chromnitrid umfaßt, die ihrerseits mit einer Schicht (7, 12) aus einem Metall überzogen ist, das zur Gruppe der Metalle Cr, Ti, Al und Ni und deren Legierungen gehört.

2. Verfahren nach Anspruch 1, **dadurch gekennzeichnet, daß** die Dicke der Absorptionsschicht etwa 45 nm beträgt.

3. Verfahren nach Anspruch 1 oder 2, **dadurch gekennzeichnet, daß** das Metall Chrom ist.

4. Verfahren nach einem der vorhergehenden Ansprüche, **dadurch gekennzeichnet, daß** die Dicke der Metallschicht über 50 nm und vorzugsweise 70 nm beträgt.

5. Verfahren nach einem der vorhergehenden Ansprüche, **dadurch gekennzeichnet, daß** die oberste Schicht (5) der Sichtverglasung mit Schicht/en (2) auf der Grundlage einer Titanverbindung ausgewählt ist.

6. Verfahren nach Anspruch 5, **dadurch gekennzeichnet, daß** die Titanverbindung ein Nitrid ist.

7. Verfahren nach Anspruch 6, **dadurch gekennzeichnet, daß** die Titanverbindung ein Oxid ist.

8. Verfahren nach einem der vorhergehenden Ansprüche, **dadurch gekennzeichnet, daß** auf die Kombination aus undurchsichtig machenden Schichten ein insbesondere auf der Grundlage von TiN ausgewählter Schutzüberzug (13) aufgebracht wird, dessen Dicke vorzugsweise etwa 10 nm beträgt.

9. Verkleidung einer Fassadenplatte, die vorgesehen ist, mit einer reflektierenden Sichtverglasung in einer Fassade verbunden zu werden, insbesondere gemäß einem Verfahren nach einem der vorhergehenden Ansprüche hergestellt ist und unter einfallendem Licht hinsichtlich der Werte von Lichtreflexion, dominierender Wellenlänge und reflektierter Farbreinheit praktisch dasselbe Verhalten wie die Sichtverglasung aufweist, **dadurch gekennzeichnet, daß** sie aus einer reflektierenden Sichtverglasung besteht, die eine Platte aus durchsichtigem Material (1, 8, 14) enthält, die mit einer oder mehreren dünnen Schicht/en (2, 9, 10) bedeckt ist, auf welcher (welchen) eine Kombination aus undurchsichtig machenden Schichten aufgebracht ist, die eine über 30 nm dicke Absorptionsschicht (6, 11) auf der Grundlage von Chromnitrid umfaßt, wobei diese Schichten mit einer über 50 nm dicken Metallschicht (7, 12) auf der Grundlage von Chrom überzogen sind.

10. Verkleidung nach Anspruch 9, **dadurch gekennzeichnet, daß** die Dicke der Absorptionsschicht etwa 45 nm beträgt.

11. Verkleidung nach Anspruch 9 oder 10, **dadurch gekennzeichnet, daß** die Dicke der Metallschicht etwa 70 nm beträgt.

12. Verkleidung nach Anspruch 11, **dadurch gekennzeichnet, daß** die Kombination aus undurchsichtig machenden Schichten mit einem Schutzüberzug, insbesondere auf der Grundlage von TiN, versehen ist.

13. Verkleidung nach Anspruch 11 oder 12, **dadurch gekennzeichnet, daß** sie einen R_{L}-Wert zwischen 9 und 42 %, einen Farbreinheitswert zwischen 5 und 23 % und unter einfallendem Licht eine neutrale oder blaue Farbe besitzt, wobei R_{L}, Farbreinheit und Farbe denen einer mit denselben dünnen Schichten (2, 9, 10) versehenen Sichtverglasung praktisch ähnlich sind.

14. Verwendung der Verkleidung, die eine Platte aus durchsichtigem Material nach einem der vorhergehenden Ansprüche enthält, zur Verwirklichung von Fassadenplatten, die mit Sichtverglasungen ähnlichen Aussehens verbunden sind.

15. Fassadenplatte, welche eine Verkleidung nach einem der Ansprüche 9 bis 13 umfaßt, **dadurch gekennzeichnet, daß** die Verkleidung unmittelbar mit einem Isoliermaterial verbunden ist.
